# EUROPÄISCHE PATENTANMELDUNG

(11) **EP 4 786 535 A1**
(43) Veröffentlichungstag der Anmeldung: **05.08.2026**
(21) Anmeldenummer: 25155290.7
(22) Anmeldetag: 31.01.2025
(51) Int. Cl.: C08J 11/08

(54) **VERFAHREN ZUR WIEDERAUFARBEITUNG VON POLYALKYLENTEREPHTHALAT ENTHALTENDEN ABFÄLLEN**

(71) Anmelder: matterr GmbH, 38122 Braunschweig (DE)
(72) Erfinder: Seedorf, Tim, 38122 Braunschweig (DE); Lücking, Charlotte, 38122 Braunschweig (DE); Gerdon, Michael, 38122 Braunschweig (DE); Müller, Clemens, 38122 Braunschweig (DE)
(74) Vertreter: Michalski Hüttermann & Partner mbB

(57) **Zusammenfassung**

Die Erfindung betrifft Verfahren zur Wiederaufarbeitung von Polyalkylenterephthalat enthaltenden Abfällen in einem kontinuierlichen Prozess mittels einer Depolymerisation mit den folgenden Verfahrensschritten:
Herstellen eines Reaktionsgemisches durch Beifügen eines Hydroxids in fester Form und/oder einer wässrigen Hydroxid-Lösung zu den Abfällen, wobei dem Reaktionsgemisch keine weiteren reaktiven Bestandteile beigefügt werden, und
kontinuierliches Fördern des Reaktionsgemisches für die Depolymerisation durch einen Planetwalzenextruder hindurch.

Auf diese Weise wird ein besonders effizientes Verfahren zur Wiederaufarbeitung von im Polyalkylenterephthalat, insbesondere Polyethylenterephthalat und/oder Polybuthylenterephthalat, enthaltenden Abfällen in einem kontinuierlichen Prozess mittels einer Depolymerisation bereitgestellt.

## Beschreibung

Die Erfindung betrifft ein Verfahren zur Wiederaufarbeitung von Polyalkylenterephthalat enthaltenden Abfällen in einem kontinuierlichen Prozess mittels einer Depolymerisation mit den folgenden Verfahrensschritten:
Herstellen eines Reaktionsgemisches durch Beifügen eines Hydroxids zu den Abfällen, wobei dem Reaktionsgemisch keine weiteren reaktiven Bestandteile beigefügt werden, und
kontinuierliches Fördern des Reaktionsgemisches für die Depolymerisation.

Mit den Begriffen "Polyalkylenterephthalat enthaltende Abfälle" und "Polyalkylenterephthalat enthaltender Abfall" sind vorliegend alle Polyalkylenterephthalat enthaltenden Materialien gemeint, die einer Wiederaufbereitung (Recycling) unterworfen werden können.

Die EP 3 790 927 B1 beschreibt ein Verfahren zur Depolymerisation von Polyalkylenterephthalat enthaltenden Abfällen unter Einsatz von Alkali- oder Erdalkalihydroxiden wie Natriumhydroxid. Die Wiederaufarbeitung von Polyalkylenterephthalat, insbesondere Polyethylenterephthalat (PET), aus Abfällen stellt seit langem eine bedeutende Herausforderung dar. Frühere Verfahren zur Depolymerisation von PET umfassen Methoden wie die Hydrolyse unter erhöhtem Druck und Temperatur, beschrieben beispielsweise in den Dokumenten US 3 120 561 und US 4 578 502. Diese Verfahren sind jedoch energetisch aufwendig und erfordern eine aufwendige Sicherheitsüberwachung, insbesondere bei der Nutzung von Chemikalien wie Ammoniumhydroxid (US 4 542 239) oder Schwefelsäure (US 4 355 175). Zusätzlich werden solche Prozesse häufig absatzweise durchgeführt, was die Wirtschaftlichkeit weiter einschränkt.

Neuere Entwicklungen wie in der US 2017/0152203 A1 beschreiben die Depolymerisation bei niedrigeren Temperaturen in Lösungsmittelmischungen wie Dichlormethan und Methanol. Während diese Ansätze geringere Temperaturen erfordern, sind die eingesetzten Lösungsmittel oftmals umweltgefährdend. Andere Verfahren verwenden Glykolyse in Extrudern bei hohen Temperaturen, ohne jedoch Terephthalsäure (TPA) direkt zu gewinnen. Ebenso bleibt die Herausforderung der effektiven Wiederaufarbeitung von mehrschichtigen Verpackungen.

Mehrschichtige Verpackungsmaterialien, wie sie in der Lebensmittelindustrie verbreitet sind, bestehen aus verschiedenen Polymeren, beispielsweise PET in Kombination mit Polyethylen (PE) oder Polyamid (PA). Diese Materialien bieten mechanische Stabilität und Schutzfunktionen, sind jedoch aufgrund der festen Verbindungen zwischen den Schichten nur schwer recyclebar. Verfahren, wie sie in der WO 2003/104315 A1 oder in der WO 2003/070376 A1 beschrieben sind, schlagen spezifische Trennmethoden vor, sind jedoch auf bestimmte Materialien oder Schichtsysteme beschränkt. Die meisten dieser Verpackungen werden daher thermisch verwertet oder deponiert, was einen Verlust wertvoller Ressourcen bedeutet.

Angesichts der zuvor genannten Einschränkungen und Herausforderungen bleibt die Entwicklung eines wirtschaftlichen, nachhaltigen und effizienten Verfahrens zur Wiederaufarbeitung von Polyalkylenterephthalat enthaltenden Abfällen eine dringende Notwendigkeit. Ziel ist es, Ansätze zu entwickeln, die eine effiziente Trennung und Wiedergewinnung der einzelnen Komponenten ohne hohe Temperaturen, Drücke oder umweltschädliche Chemikalien ermöglichen. Die Notwendigkeit solcher Verfahren wird durch die wachsende Nachfrage nach nachhaltigen Recyclingmethoden und die regulatorischen Anforderungen zur Reduzierung von Deponieabfällen und CO₂-Emissionen weiter verstärkt.

Vor dem geschilderten Hintergrund liegt der vorliegenden Erfindung die Aufgabe zugrunde, ein besonders effizientes Verfahren zur Wiederaufarbeitung von im Polyalkylenterephthalat, insbesondere Polyethylenterephthalat und/oder Polybuthylenterephthalat, enthaltenden Abfällen in einem kontinuierlichen Prozess mittels einer Depolymerisation anzugeben. Dieses Verfahren soll in der Lage sein, mit hohem Durchsatz auch farbige und nichtfarbige Mehrschichtsysteme/Mehrkomponentensysteme mit und ohne Ausrüstungsstoffen nahezu vollständig chemisch in ihre Ausgangsstoffe zu recyceln, um aus den Recyclingprodukten neue Polyalkylenterephthalatprodukte herstellen zu können.

Diese Aufgabe wird durch den Gegenstand des Patentanspruchs 1 gelöst. Bevorzugte Weiterbildungen finden sich in den Unteransprüchen.

Erfindungsgemäß wird somit ein Verfahren zur Wiederaufarbeitung von Polyalkylenterephthalat enthaltenden Abfällen in einem kontinuierlichen Prozess mittels einer Depolymerisation mit den folgenden Verfahrensschritten bereitgestellt:
Herstellen eines Reaktionsgemisches durch Beifügen eines Hydroxids in fester Form und/oder einer wässrigen Hydroxid-Lösung zu den Abfällen, wobei dem Reaktionsgemisch keine weiteren reaktiven Bestandteile beigefügt werden, und
kontinuierliches Fördern des Reaktionsgemisches für die Depolymerisation durch einen Planetwalzenextruder hindurch.

Die vorliegende Erfindung bietet Vorteile, die auf die spezifische Gestaltung des Verfahrens unter Verwendung eines Planetwalzenextruders zurückzuführen sind. Die Integration eines Planetwalzenextruders in den Prozess ermöglicht eine besonders effiziente und homogene Depolymerisation von Polyalkylenterephthalat-haltigen Abfällen. Der Planetwalzenextruder zeichnet sich durch seine besondere Bauweise aus, die eine intensive Durchmischung und einen gleichmäßigen Stofftransport ermöglicht. Er besteht aus einer zentralen Hauptwelle, die von mehreren kleineren, planetarisch angeordneten Walzen umgeben ist. Diese planetarischen Walzen rotieren nicht nur um ihre eigene Achse, sondern auch um die zentrale Welle, was zu einer komplexen Scher- und Mischbewegung führt. Die Bauweise des Extruders gewährleistet eine optimale Durchmischung des Reaktionsgemisches, wodurch die Reaktanten in ständigem Kontakt bleiben und die chemischen Reaktionen effizient ablaufen können. Zudem sorgt die hohe Scherwirkung dafür, dass auch schwer lösliche Bestandteile, wie beispielsweise Farbmittel oder andere Additive, effektiv in den Prozess integriert werden können. Außerdem verringern die kurzen Verweilzeiten und die dadurch kurzen Reaktionszeit in dem Planetwalzenextruder Nebenreaktionen anderer Bestandteile, wie Farbmittel oder Additive.

Ein weiterer wesentlicher Vorteil des Planetwalzenextruders ist seine Fähigkeit, hohe Durchsätze bei gleichzeitiger Prozesskontrolle zu ermöglichen. Durch die kontinuierliche Förderung des Reaktionsgemisches wird eine gleichbleibende Reaktionsumgebung geschaffen, was die Effizienz und Reproduzierbarkeit des Verfahrens erhöht. Darüber hinaus erlaubt der Extruder eine präzise Einstellung von Temperatur und Druck entlang des Reaktorbehälters, was entscheidend für die Optimierung der Depolymerisationsreaktion ist. Im Vergleich zu herkömmlichen Reaktoren, die oft absatzweise arbeiten, eliminiert die kontinuierliche Betriebsweise die zeitaufwändigen Schritte des Befüllens und Entleerens, wodurch die Produktivität des gesamten Prozesses erheblich verbessert wird.

Der Planetwalzenextruder arbeitet vorzugsweise mit einer Zentralspindeldrehzahl von 40 bis 200 U/min und bei einer Extrusionstemperatur von 30 bis 197 °C.

Die Erfindung umfasst mehrere bevorzugte Weiterbildungen, die zur weiteren Verbesserung des Verfahrens beitragen können. Insbesondere ist vorzugsweise vorgesehen, dass die Polyalkylenterephthalat-haltigen Abfälle Polyethylenterephthalat (PET) und/oder Polybutylenterephthalat (PBT) und/oder Polyethylenterephthalatisophthalat umfassen. Diese Materialien sind aufgrund ihrer weitverbreiteten Anwendung in Verpackungen, Flaschen und technischen Bauteilen von besonderem Interesse für das Recycling, da sie eine hohe Reinheit und Wiederverwertbarkeit der gewonnenen Ausgangsstoffe ermöglichen.

Ein weiterer bevorzugter Aspekt der Erfindung besteht darin, dass das eingesetzte Hydroxid Alkalihydroxid und/oder Erdalkalihydroxid ist, das in fester oder wässrig gelöster Form den Abfällen beigefügt wird.

Die Erfindung umfasst zahlreiche weitere Ausgestaltungen des Verfahrens, die dessen Effizienz, Flexibilität und Nachhaltigkeit weiter verbessern. Jede dieser Ausgestaltungen bietet spezifische Vorteile und kann zur Verbesserung des Depolymerisationsprozesses beitragen:
Die Zerkleinerung der Abfälle vor der Herstellung des Reaktionsgemisches verbessert die Reaktionskinetik erheblich. Unter anderem sind für die Zerkleinerung die folgenden Verfahren einsetzbar: mechanische Zerkleinerung durch Schreddern, Schneiden, Zerkleinern mittels einer Guillotinenschere, Reißen und/oder Mühlen. Durch die kleinere Partikelgröße wird die spezifische Oberfläche der Abfälle vergrößert, was den Kontakt mit den Reaktanten erleichtert und die Geschwindigkeit der chemischen Reaktionen erhöht. Dies führt zu einer effizienteren Depolymerisation und einer gleichmäßigeren Umwandlung der Polyalkylenterephthalate. Im Fall des Recyclings von PET aus Polyestertextilien kann der Zerkleinerung eine Granulation oder Pelletierung nachfolgen, um die Dosierfähigkeit der Abfälle in den Reaktionsbehälter herzustellen bzw. zu verbessern. Diese kann z. B. mit einer Flachmatrizenpresse erfolgen. Darüber hinaus wird damit die Förderfähigkeit verbessert. Vorzugsweise erfolgt eine Zerkleinerung auf eine maximale Größe von 10 mm, ganz besonders bevorzugt auf eine maximale Größe auf 3 mm. Alternativ sind folgende Verfahren einsetzbar: Kompaktieren durch Granulation, Pelletierung, Agglomeration, Formpressen, Pressagglomeration und/oder Verdichtung

Die Durchführung der Depolymerisation bei einer Temperatur unterhalb des Zersetzungspunktes des Polyalkylenterephthalats und/oder unterhalb des Siedepunktes von Monoethylenglykol, vorzugsweise bei etwa 110 bis 160 °C, bietet entscheidende Vorteile. Diese moderaten Temperaturen minimieren die thermische Belastung des Reaktionsgemisches, verhindern unerwünschte Nebenreaktionen und reduzieren den Energieverbrauch des Prozesses.

Das Einleiten von Inertgas, vorzugsweise Stickstoff, in den Reaktorbehälter schützt die Reaktionsmischung vor oxidativen Einflüssen. Dies verbessert die Stabilität der chemischen Reaktionen und erhöht die Ausbeute an hochwertigen Produkten. Stickstoff als Inertgas ist dabei leicht verfügbar und wirtschaftlich einsetzbar.

Die Zugabe von Wasser zum Reaktionsaustrag zur Lösung fester Bestandteile erleichtert die Trennung und weitere Verarbeitung der Produkte. Gelöste Feststoffe können so effizient entfernt oder weiterverarbeitet werden. Dies erhöht die Flexibilität des Verfahrens und trägt zur Gewinnung hochwertiger Recyclingprodukte bei.

Das Herausfiltern der Feststoffe aus dem Reaktionsaustrag ermöglicht eine gezielte Trennung der gewünschten Produkte von Nebenbestandteilen. Dies verbessert die Reinheit der gewonnenen Terephthalsäure und der anderen Reaktionsprodukte erheblich und bereitet sie optimal für weitere Verwendungen auf.

Die Zugabe einer Säure zum Reaktionsaustrag zur Umwandlung von gebildeten Carboxylat-lonen in freie Säuren erhöht die Reinheit der Produkte weiter. Diese Maßnahme trägt zur direkten Gewinnung hochwertiger Säuren bei, die ohne zusätzliche Verarbeitungsschritte wiederverwendet oder weiterverarbeitet werden können. Vor der Zugabe von Säure erfolgt vorzugsweise eine Aufreinigung mittels Adsorptionsmittels wie z.B. Aktivkohle.

Das Verfahren kann folgenden weiteren Verfahrensschritt aufweisen: als Schmiermittel, wobei das Alkylenglykol vorzugsweise ein als Produkt der angestrebten Depolymerisation herstellbares Alkylenglykol ist. Das Beifügen von Alkylenglykol zu dem Reaktionsgemisch im Unterschuss wird vorliegend so verstanden, dass es mit der patentgemäßen Forderung, dass dem Reaktionsgemisch keine weiteren reaktiven Bestandteile beigefügt werden, im Einklang steht, da das zugefügte Alkylenglykol, abgesehen von Nebenreaktionen wie z. B. Oxidation durch thermische Beanspruchung, unverändert aus der Extrusion wieder hervorgeht. Das verwendete Alkylenglykol ist vorzugsweise Monoethylenglykol.

Das Entfernen von Alkylenglykol aus dem erhaltenen Reaktionsaustrag kann durch Verdampfen erfolgen. Das erleichtert die Rückgewinnung und Reinigung des Produkts. Die Verdampfung stellt eine effiziente Trennmethode dar, die sowohl die Reinheit des recycelten Alkylenglykols als auch der verbleibenden Feststoffe verbessert. Alternativ ist eine destillative Isolierung des Alkylenglykols am Ende des Prozesses möglich, also noch nach der Säure-Fällung.

Die Verwendung der gewonnenen Produkte in einem anschließenden Polymerisationsschritt zur Herstellung von recyceltem PET, PBT oder Polypropylenterephthalat schließt den Recyclingkreislauf. Dadurch können hochwertige Produkte aus den recycelten Materialien hergestellt werden, was den Bedarf an Primärrohstoffen reduziert und die Umweltbelastung nachhaltig senkt.

Nachfolgend werden zur näheren Erläuterung des Verwertungsverfahrens verschieden Anwendungsbeispiele beschrieben. Dabei zeigen in der Zeichnung
Fig. 1 schematisch den Ablauf eines Verfahrens gemäß einem ersten Ausführungsbeispiel der Erfindung,
Fig. 2 schematisch den Ablauf eines Verfahrens gemäß einem zweien Ausführungsbeispiel der Erfindung,
Fig. 3 schematisch den Ablauf eines Verfahrens gemäß einem dritten Ausführungsbeispiel der Erfindung und
Fig. 4 schematisch den Ablauf eines Verfahrens gemäß einem vieren Ausführungsbeispiel der Erfindung,

Die nachfolgend beschriebenen Ausgestaltungen des erfindungsgemäßen Verfahrens ermöglichen das Recycling von bisher nicht - oder nur thermisch - verwertbaren Polyethylenterephthalat (PET)-Abfällen. Das Verfahren kann auch für die Verwertung anderer Polyalkylenterephthalate wie Polybutylenterephthalat verwendet werden.

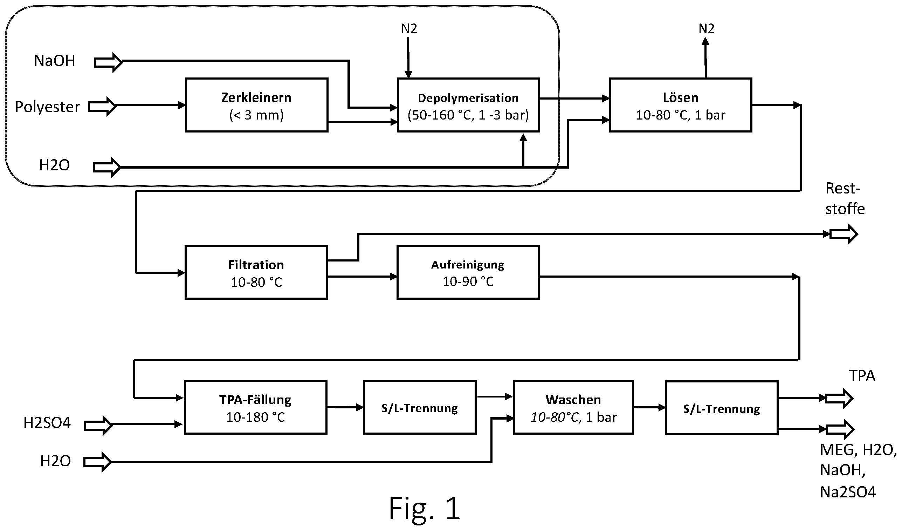

Wie in Fig. 1 exemplarisch dargestellt, werden PET-haltige Abfälle, auch Mehrschichtsysteme, wie z. B. Getränkeflaschen, Waschmittelflaschen (opak, klar oder schwarz gefärbt) oder Lebensmittelverpackungen anderer Art wie Salatschalen, Wurst- und Käseverpackungen oder PET-haltige Produktionsabfälle, sowie PET-haltige textile Abfälle, wie Polyesterware, Polycotton und andere Mischgewebe, wie z. B. Polyester-Elastan, Polyester-Nylon oder andere, in einem ersten Schritt "Zerkleinern" gewaschen und auf eine Partikelgröße von kleiner 10 mm zerkleinert. Anschließend können die Abfälle vorgetrocknet werden, um den Wassergehalt des PET-Materials zu reduzieren. Alternativ, wie in Fig. 1 dargestellt, wird das zu bearbeitende Material nach dem erfindungsgemäßen Verfahren direkt verarbeitet, sodass die Trocknung entfällt. In einigen Fällen kann jedoch eine intensivere Trocknung vorteilhaft sein.

In einem zweiten Prozessschritt "Depolymerisation" werden die Abfälle in einen Planetwalzenextruder eingeführt. In diesem Extruder wird die Verseifungs- bzw. Depolymerisationsreaktion des PET kontinuierlich durchgeführt. Es werden in der mit Bezugnahme auf die Fig. 1 beschriebenen Anlage beispielsweise 6,66 kg/h PET-haltige Abfälle, 3,33 kg/h Natriumhydroxid und 2 kg/h Monoethylenglykol (MEG) verarbeitet. Außerdem wird Wasser wird zugegeben, und zwar in etwa gleicher Menge wie Feststoff (PET und NaOH). Das Verhältnis aus Natriumhydroxid zu PET-Abfällen wird während des Prozesses so eingestellt, dass ein konstantes stöchiometrisches Verhältnis von etwa 2, bezogen auf die konstitutionelle Repetiereinheit von PET vorliegt. Der Reaktionsaustrag des Planetwalzenextruders besteht aus Dinatriumterephthalat, MEG, Wasser und nicht reagierten Anteilen des Natriumhydroxids sowie Reststoffen aus den PET-Abfällen, wie z. B. Farbstoffen, Abbauprodukten, und anderen Polymeren wie PE, PP und PS.

Der Planetwalzenextruder ist modular aufgebaut und besteht aus individuell temperierbaren Segmenten, die eine präzise Steuerung von Temperatur und Reaktionsbedingungen ermöglichen. Die planetarisch angeordneten Walzen rotieren um eine zentrale Hauptwelle und erzeugen durch ihre Scherwirkung eine intensive Durchmischung der Reaktionsmischung. Diese Bauweise ermöglicht eine effektive mechanische Beanspruchung der Abfälle, die die Depolymerisationsreaktion fördert, indem die Bindungen zwischen den Schichten in Mehrkomponentenmaterialien aufgebrochen werden.

Die Module des Extruders sind so konfiguriert, dass die Edukte in den Extruder eingezogen und entlang der Zonen mechanisch bearbeitet werden. Am Ende des Planetwalzenextruders wird der Reaktionsaustrag durch eine speziell ausgestaltete Öffnung gefördert.

Während des Prozesses wird MEG kontinuierlich destillativ entfernt, was die Effizienz des Verfahrens weiter steigert. Die gesamte Apparatur wird unter Inertgasatmosphäre betrieben, um die Reaktionen vor Sauerstoffeinflüssen zu schützen und eine hohe Produktreinheit sicherzustellen.

Durch die spezifischen Eigenschaften des Planetwalzenextruders, insbesondere die gleichmäßige und hohe Scher- und Mischwirkung sowie die präzise Steuerung der Reaktionsbedingungen, wird eine homogene Durchmischung der Feststoffe gewährleistet. Dies führt zu einer nahezu vollständigen Verseifung des PET-Anteils in den Abfällen. Die mittlere Verweilzeit im Extruder beträgt etwa zwei Minuten, in denen ein Umsatz von 92-97 % des PET erreicht wird. Die Prozessführung ermöglicht außerdem eine hohe chemische Selektivität.

Die bisher beschriebenen Schritte erfolgen im Extruder, was in den Figuren dadurch gekennzeichnet ist, dass diese Schritte eingerahmt sind.

Die MEG-Dämpfe werden in einem Kühler kondensiert und aufgefangen. Im Verfahrensschritt "Lösen" wird der Reaktionsaustrag in einem Rührkessel, einer Mischpumpe, einem Homogenisator oder einer Mischschnecke in Wasser gelöst, wodurch unlösliche Reststoffe (z. B. PE, PP, Metalle, Pappe) durch Filtration abgetrennt werden können. Danach folgen die Schritte "Filtration" und "Aufreinigung".

Im darauffolgenden Schritt "TPA-Fällung" wird die gereinigte Lösung mit Schwefelsäure versetzt. Die ausgefällte Terephthalsäure (TPA) wird durch Filtration gewonnen, mit Wasser gewaschen und von Resten der Schwefelsäure sowie des Natriumsulfats gereinigt. Das gewonnene TPA kann für die Herstellung neuer Polyalkylenterephthalate genutzt werden. Es folgen die Schritte "S/L-Trennung" (Trennung von festen und flüssigen Anteilen), "Waschen" und ein weiterer Schritt "S/L-Trennung", wodurch letztlich TPA erhalten wird.

Nachfolgend wird die Erfindung anhand von mehreren Beispielen weiter im Detail erläutert.

### Beispiel 1

In einen Planetwalzenextruder mit einer innenverzahnten Buchse von 70 mm werden unter Inertgasatmosphäre kontinuierlich 15 kg/h PE-beschichtete PET-Flakes und 6,5 kg/h Natriumhydroxid eingeführt. Diese Zugabeströme erlauben die Aufrechterhaltung eines konstanten Stoffmengenverhältnisses NaOH/PET von etwa 2, bezogen auf die konstitutionelle Repetiereinheit von PET. Zusätzlich werden 21,5 kg/h Wasser und 4,2 kg/h MEG in den Extruder gegeben. Dabei ist es maßgeblich, dass das Wasser erst nach der Reaktion, am Ende des Extruders dazugegeben wird. Es handelt sich nicht um eine reaktive Komponente, sondern dient dem Quenchen bzw. Anlösen der Reaktionsmischung. Das gilt für alle vorliegend beschriebenen Beispiele. Die Gehäusetemperatur des Extruders wird zwischen 50-160 °C eingestellt. Der Planetwalzenextruder arbeitet mit einer Zentralspindeldrehzahl von 100 U/min. Probenentnahmen zeigen einen PET-Umsatz von über 90 %. Der Extruderaustrag wird anschließend in Wasser gelöst, gefolgt von einer Fest-Flüssig-Trennung. Danach wird die Lösung gereinigt und Terephthalsäure (TPA) durch Zugabe einer Säure ausgefällt.

### Beispiel 2

Unter Anwendung eines ähnlichen Verfahrens wird ein heterogener Inputstrom aus Abfällen verarbeitet, der unter anderem PET vermischt mit weiteren Komponenten wie z.B. Elastan oder Polyamid oder Baumwolle enthält. Es werden 15 kg/h des heterogenen Inputstroms, 6,5 kg/h Natriumhydroxid und 4,2 kg/h MEG und 21,5 kg/h Wasser in den Planetwalzenextruder dosiert. Die Gehäusetemperatur wird auf 50-160°C eingestellt, und die Zentralspindel des Extruders dreht mit 60 U/min. Der PET-Umsatz liegt bei über 90 %. Der Extruderaustrag wird anschließend in Wasser gelöst, gefolgt von einer Fest-Flüssig-Trennung. Danach wird die Lösung gereinigt und Terephthalsäure (TPA) durch Zugabe einer Säure ausgefällt.

### Beispiel 3

In einem Planetwalzenextruder mit einer innenverzahnten Buchse von 30 mm werden unter Inertgasatmosphäre kontinuierlich 1,2 kg/h PE-beschichtete PET-Flakes und 0,6 kg/h Natriumhydroxid eingeführt. Diese Zugabeströme erlauben die Aufrechterhaltung eines konstanten Stoffmengenverhältnisses NaOH/PET von etwa 2, bezogen auf die konstitutionelle Repetiereinheit von PET. Zusätzlich werden 2 kg/h Wasser und 0,3 kg/h MEG in den Extruder gegeben. Die Gehäusetemperatur des Extruders wird zwischen 50-160 °C eingestellt. Der Planetwalzenextruder arbeitet mit einer Zentralspindeldrehzahl von 120 U/min. Probenentnahmen zeigen einen PET-Umsatz von über 90 %. Der Extruderaustrag wird anschließend in Wasser gelöst, gefolgt von einer Fest-Flüssig-Trennung. Danach wird die Lösung gereinigt und Terephthalsäure (TPA) durch Zugabe einer Säure ausgefällt.

### Beispiel 4

In einem Planetwalzenextruder werden kontinuierlich 45 kg/h PE-beschichtete PET-Flakes, 19,8 kg/h Natriumhydroxid und 10,1 kg/h MEG und 78 kg/h Wasser zugeführt. Die Zugabemengen ermöglichen ein stöchiometrisches Verhältnis NaOH/PET von mindestens 2. Die Gehäusetemperatur wird zwischen 10-150 °C eingestellt, und die Zentralspindeldrehzahl beträgt 200 U/min. Der Umsatz liegt bei über 90 %.

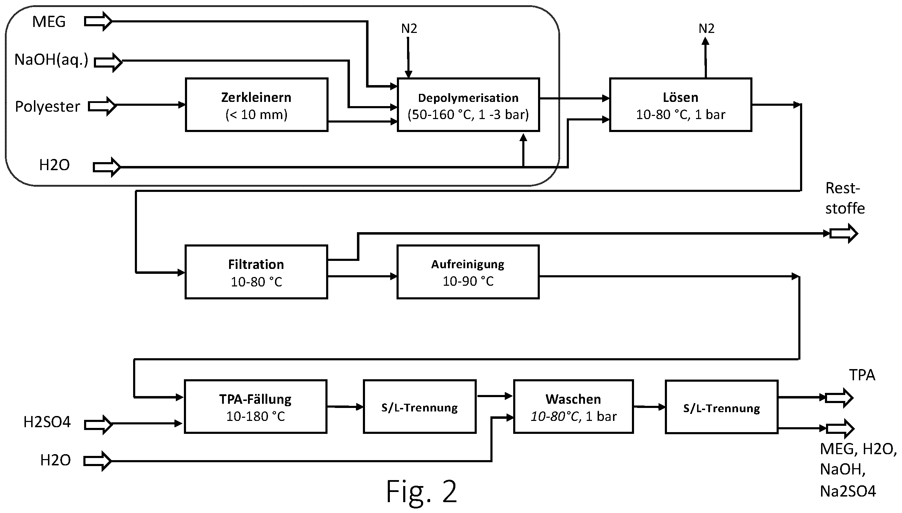

Während die zuvor beschriebenen Beispiele 1 bis 4 dem aus Fig. 1 ersichtlichen Ablauf entsprechen, ist der Ablauf des im folgenden beschriebenen Beispiels 5 in Fig. 2 dargestellt.

### Beispiel 5

In einen Planetwalzenextruder mit einer innenverzahnten Buchse von 70 mm werden unter Inertgasatmosphäre kontinuierlich 15 kg/h PE-beschichtete PET-Flakes und 13,2 kg/h Natriumhydroxidlösung eingeführt. Zusätzlich werden 15 kg/h Wasser und 2,2 kg/h MEG in den Extruder gegeben. Die Gehäusetemperatur des Extruders wird zwischen 50-160 °C eingestellt. Der Planetwalzenextruder arbeitet mit einer Zentralspindeldrehzahl von 180 U/min. Probenentnahmen zeigen einen PET-Umsatz von über 95 %. Der Extruderaustrag wird anschließend in Wasser gelöst, gefolgt von einer Fest-Flüssig-Trennung. Danach wird die Lösung gereinigt und Terephthalsäure (TPA) durch Zugabe einer Säure ausgefällt.

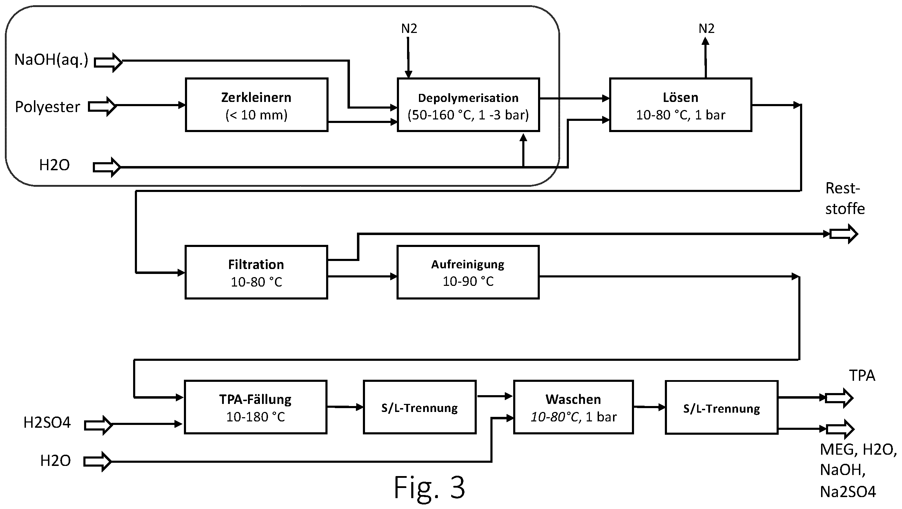

Der Ablauf des im folgenden beschriebenen Beispiels 6 in Fig. 3 dargestellt.

### Beispiel 6

In einen Planetwalzenextruder mit einer innenverzahnten Buchse von 70 mm werden unter Inertgasatmosphäre kontinuierlich 15 kg/h PE-beschichtete PET-Flakes und 13,2 kg/h Natriumhydroxidlösung eingeführt. Zusätzlich werden 15 kg/h Wasser in den Extruder gegeben. Dieses Beispiel kommt ohne MEG aus. Die Gehäusetemperatur des Extruders wird zwischen 50-160 °C eingestellt. Der Planetwalzenextruder arbeitet mit einer Zentralspindeldrehzahl von 180 U/min. Probenentnahmen zeigen einen PET-Umsatz von über 90 %. Der Extruderaustrag wird anschließend in Wasser gelöst, gefolgt von einer Fest-Flüssig-Trennung. Danach wird die Lösung gereinigt und Terephthalsäure (TPA) durch Zugabe einer Säure ausgefällt.

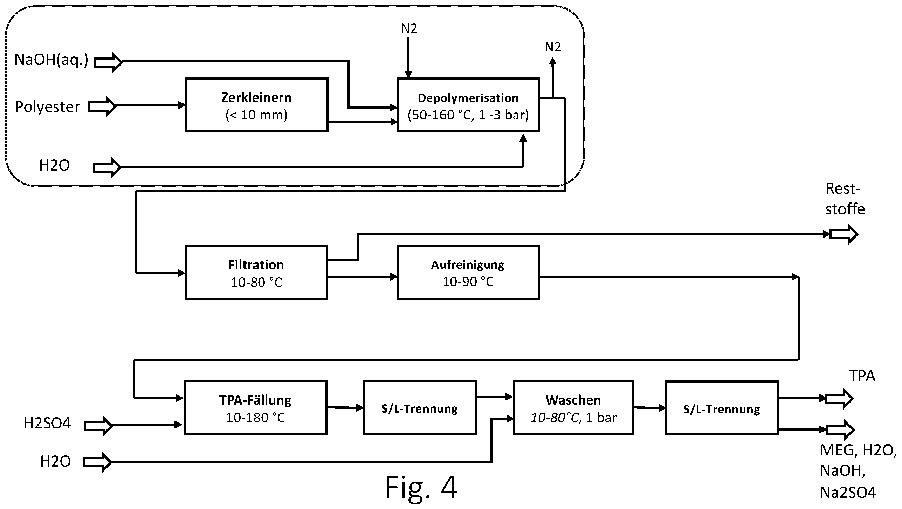

Wie in Fig. 4 dargestellt, ist es auch möglich den Schritt "Lösen" außerhalb des Extruders zu vermeiden, also ein Lösen bereits im Planetwalzenextruder vorzusehen.

In einen Planetwalzenextruder mit einer innenverzahnten Buchse von 70 mm werden dazu unter Inertgasatmosphäre kontinuierlich 15 kg/h PE-beschichtete PET-Flakes und 6,5 kg/h Natriumhydroxid eingeführt. Zusätzlich werden 110 kg/h Wasser am Ende in den Extruder gegeben. Die Gehäusetemperatur des Extruders wird zwischen 50-160 °C eingestellt. Der Planetwalzenextruder arbeitet mit einer Zentralspindeldrehzahl von 100 U/min. Probenentnahmen zeigen einen PET-Umsatz von über 90 %. Der Extruderaustrag wird in einer Fest-Flüssig-Trennung separiert. Danach wird das Filtrat gereinigt und Terephthalsäure (TPA) durch Zugabe einer Säure ausgefällt.

In einen Planetwalzenextruder mit einer innenverzahnten Buchse von 70 mm werden dazu alternativ unter Inertgasatmosphäre kontinuierlich 15 kg/h PE-beschichtete PET-Flakes und 13,2 kg/h Natriumhydroxidlösung eingeführt. Zusätzlich werden 100 kg/h Wasser zum Lösen am Ende in den Extruder gegeben. Die Gehäusetemperatur des Extruders wird zwischen 50-160 °C eingestellt. Der Planetwalzenextruder arbeitet mit einer Zentralspindeldrehzahl von 180 U/min. Probenentnahmen zeigen einen PET-Umsatz von über 90 %.

Der Extruderaustrag wird in einer Fest-Flüssig-Trennung separiert. Danach wird das Filtrat gereinigt und Terephthalsäure (TPA) durch Zugabe einer Säure ausgefällt.

Das Verfahren ermöglicht somit die effiziente Verarbeitung mehrschichtiger PET-haltiger Abfälle und Textilien mit mehreren polymeren Komponentenmit mit hohem Durchsatz und hoher Qualität. Der Einsatz des Planetwalzenextruders spielt hierbei eine zentrale Rolle, da er durch seine Bauweise eine homogene Durchmischung und effiziente mechanische Verarbeitung gewährleistet, die für die Depolymerisation unerlässlich sind.

Die Abfälle können Duo- oder Mehrschichtsysteme und Textilien enthalten, die aus einem oder mehreren Polymeren bestehen.

Die Abfälle können weitere Polymere und Naturstoffe enthalten, was das Verfahren besonders flexibel für unterschiedliche Abfallströme macht.

Das Verfahren ist besonders geeignet für Mehrschichtmaterialien und Textilien, die eine oder mehrere Schichten aus Ethylen-Vinylalkohol-Copolymer (EVOH), Pappe, Polyamid (PA), Polyethylen (PE), Polypropylen (PP) oder Polystyrol (PS) enthalten.

Die Verseifung erfolgt unter präziser Kontrolle der Temperatur und Druckverhältnisse im Planetwalzenextruder, um eine effiziente Depolymerisation bei moderaten Bedingungen sicherzustellen.

## Patentansprüche

1. Verfahren zur Wiederaufarbeitung von Polyalkylenterephthalat enthaltenden Abfällen in einem kontinuierlichen Prozess mittels einer Depolymerisation mit den folgenden Verfahrensschritten:
Herstellen eines Reaktionsgemisches durch Beifügen eines Hydroxids in fester Form und/oder einer wässrigen Hydroxid-Lösung zu den Abfällen, wobei dem Reaktionsgemisch keine weiteren reaktiven Bestandteile beigefügt werden, und
kontinuierliches Fördern des Reaktionsgemisches für die Depolymerisation durch einen Planetwalzenextruder hindurch.

2. Verfahren nach Anspruch 1, wobei die Abfälle vor der Herstellung des Reaktionsgemisches zerkleinert werden, um die Förderfähigkeit zu verbessern und die Oberfläche zu vergrößern.

3. Verfahren nach einem der vorhergehenden Ansprüche, wobei die Depolymerisation bei einer Temperatur unterhalb des Zersetzungspunktes des Polyalkylenterephthalats und/oder unterhalb des Siedepunktes von Monoethylenglykol durchgeführt wird.

4. Verfahren nach einem der vorhergehenden Ansprüche, wobei in den Reaktorbehälter Inertgas eingeleitet wird.

5. Verfahren nach einem der vorhergehenden Ansprüche, wobei dem Reaktionsaustrag Wasser zum Lösen fester Bestandteile beigefügt wird.

6. Verfahren nach einem der vorhergehenden Ansprüche, wobei Feststoffe aus dem erhaltenen Reaktionsaustrag herausgefiltert werden.

7. Verfahren nach einem der vorhergehenden Ansprüche, wobei dem erhaltenen Reaktionsaustrag eine Säure beigefügt wird, um im Reaktionsaustrag enthaltene bei der Depolymerisation gebildete Carboxylat-Ionen in Säure umzuwandeln.

8. Verfahren nach einem der vorherigen Ansprüche, wobei das Hydroxid Alkalihydroxid und/oder eines Erdalkalihydroxid umfasst, vorzugsweise in fester oder gelöster, insbesondere wässriger, Form.

9. Verfahren nach Anspruch 8, wobei das Alkalihydroxid bzw. das Erdalkalihydroxid derart mit einem Massenstrom beigefügt wird, dass das stöchiometrische Verhältnis des Alkalihydroxids bzw. des Erdalkalihydroxid zu dem Polyalkylenterephthalat bezogen auf eine konstitutionelle Repetiereinheit mindestens 2, vorzugsweise mindestens 2,4, ist.

10. Verfahren nach einem der vorherigen Ansprüche, mit folgendem weiteren Verfahrensschritt:
Beifügen von Alkylenglykol zu dem Reaktionsgemisch im Unterschuss als Schmiermittel, wobei das Alkylenglykol vorzugsweise ein als Produkt der angestrebten Depolymerisation herstellbares Alkylenglykol ist.

11. Verfahren nach Anspruch 10, wobei aus dem erhaltenen Reaktionsaustrag Alkylenglykol durch Verdampfen entfernt wird.

12. Verfahren nach einem der vorherigen Ansprüche, wobei dem die gewonnenen Produkte in einem Polymerisationsschritt zur recycelten PET-Produkten oder zu recycelten PBT-Produkten oder zu recycelten Polypropylenterephthalat-Produkten polymerisiert werden.

13. Verwendung eines mit einem Verfahren nach einem der vorherigen Ansprüche gewonnenem Produkt zur Herstellung von recycelten PET-Produkten oder zu recycelten PBT-Produkten oder zu recycelten Polypropylenterephthalat-Produkten durch Polymerisation.

14. Produkt, erhältlich mit einem Verfahren nach einem der Ansprüche 1 bis 12.

## Geänderte Patentansprüche

### Geänderte Patentansprüche gemäss Regel 137(2) EPÜ.

1. Verfahren zur Wiederaufarbeitung von Polyalkylenterephthalat enthaltenden Abfällen in einem kontinuierlichen Prozess mittels einer Depolymerisation mit den folgenden Verfahrensschritten:
Herstellen eines Reaktionsgemisches durch Beifügen eines Hydroxids in fester Form und/oder einer wässrigen Hydroxid-Lösung zu den Abfällen, wobei dem Reaktionsgemisch keine weiteren reaktiven Bestandteile beigefügt werden, und
kontinuierliches Fördern des Reaktionsgemisches für die Depolymerisation durch einen Planetwalzenextruder hindurch.

2. Verfahren nach Anspruch 1, wobei die Abfälle vor der Herstellung des Reaktionsgemisches zerkleinert werden, um die Förderfähigkeit zu verbessern und die Oberfläche zu vergrößern.

3. Verfahren nach einem der vorhergehenden Ansprüche, wobei die Depolymerisation bei einer Temperatur unterhalb des Zersetzungspunktes des Polyalkylenterephthalats und/oder unterhalb des Siedepunktes von Monoethylenglykol durchgeführt wird.

4. Verfahren nach einem der vorhergehenden Ansprüche, wobei in den Reaktorbehälter Inertgas eingeleitet wird.

5. Verfahren nach einem der vorhergehenden Ansprüche, wobei dem Reaktionsaustrag Wasser zum Lösen fester Bestandteile beigefügt wird.

6. Verfahren nach einem der vorhergehenden Ansprüche, wobei Feststoffe aus dem erhaltenen Reaktionsaustrag herausgefiltert werden.

7. Verfahren nach einem der vorhergehenden Ansprüche, wobei dem erhaltenen Reaktionsaustrag eine Säure beigefügt wird, um im Reaktionsaustrag enthaltene bei der Depolymerisation gebildete Carboxylat-Ionen in Säure umzuwandeln.

8. Verfahren nach einem der vorherigen Ansprüche, wobei das Hydroxid Alkalihydroxid und/oder eines Erdalkalihydroxid umfasst, vorzugsweise in fester oder gelöster, insbesondere wässriger, Form.

9. Verfahren nach Anspruch 8, wobei das Alkalihydroxid bzw. das Erdalkalihydroxid derart mit einem Massenstrom beigefügt wird, dass das stöchiometrische Verhältnis des Alkalihydroxids bzw. des Erdalkalihydroxid zu dem Polyalkylenterephthalat bezogen auf eine konstitutionelle Repetiereinheit mindestens 2, vorzugsweise mindestens 2,4, ist.

10. Verfahren nach einem der vorherigen Ansprüche, mit folgendem weiteren Verfahrensschritt:
Beifügen von Alkylenglykol zu dem Reaktionsgemisch im Unterschuss als Schmiermittel, wobei das Alkylenglykol vorzugsweise ein als Produkt der angestrebten Depolymerisation herstellbares Alkylenglykol ist.

11. Verfahren nach Anspruch 10, wobei aus dem erhaltenen Reaktionsaustrag Alkylenglykol durch Verdampfen entfernt wird.

12. Verfahren nach einem der vorherigen Ansprüche, wobei dem die gewonnenen Produkte in einem Polymerisationsschritt zur recycelten PET-Produkten oder zu recycelten PBT-Produkten oder zu recycelten Polypropylenterephthalat-Produkten polymerisiert werden.

13. Verwendung eines mit einem Verfahren nach einem der vorherigen Ansprüche gewonnenem Produkt zur Herstellung von recycelten PET-Produkten oder zu recycelten PBT-Produkten oder zu recycelten Polypropylenterephthalat-Produkten durch Polymerisation.
